# EUROPÄISCHE PATENTANMELDUNG

(11) **EP 2 128 016 A2**
(43) Veröffentlichungstag der Anmeldung: **02.12.2009**
(21) Anmeldenummer: 09161216.8
(22) Anmeldetag: 27.05.2009
(51) Int. Cl.: B63H 23/30

(54) **Steuereinrichtung und Verfahren zur Beeinflussung der Motordrehzahl sowie des Schlupfgrads einer Kupplung eines Schiffsantriebs**

(30) Priorität: 27.05.2008 DE 102008025480
(71) Anmelder: Robert Bosch GmbH, 70442 Stuttgart (DE)
(72) Erfinder: Henkner, Rainer, 30419 Hannover (DE)
(74) Vertreter: Kietzmann, Lutz

(57) **Zusammenfassung**

Steuereinrichtung und Verfahren zur Beeinflussung der Drehzahl eines Motors (3) sowie des Schlupfgrads einer diesem nachgeschalteten Kupplung eines Getriebes (5) eines Schiffsantriebes über eine elektronische Steuereinheit (2) nach Maßgabe eines manuellen Kommandogebers (1) zur Wahl der Drehrichtung sowie der Fahrtgeschwindigkeit, wobei beim Einkuppeln der Kupplung zur Einleitung einer Vorwärts- oder Rückwärtsfahrt eine Schlupfvorgabeeinheit (10) der elektronischen Steuereinheit (2) den Schlupfgrad der Kupplung nach Maßgabe einer Rampenfunktionskennlinie zur Verringerung des Kupplungsschlupfes (s) während einer Einkupplungszeitdauer (t) beeinflusst.

## Beschreibung

Die vorliegende Erfindung betrifft eine Steuereinrichtung sowie ein Verfahren zur Beeinflussung der Drehzahl eines Motors sowie des Schlupfgrades einer diesem nachgeschalteten Kupplung eines Schiffsantriebes über eine elektronische Steuereinheit nach Maßgabe eines manuellen Kommandogebers zur Wahl der Drehrichtung sowie der Fahrtgeschwindigkeit.

Das Einsatzgebiet der vorliegenden Erfindung erstreckt sich auf Schiffsantriebe, vorzugsweise für den Bereich des Yachtenbaus. Hier kommen gewöhnlich verbrennungsmotorgetriebene Schiffsantriebe mit vorzugsweise einem oder zwei Schiffsschrauben zum Einsatz. Diese werden über ein dem Motor nachfolgenden Getriebe in Drehbewegung versetzt. Während der Motor gewöhnlich hinsichtlich seiner Drehzahl steuerbar ist, um die Fahrtgeschwindigkeit des Schiffes festzulegen, ist das Getriebe hinsichtlich der Drehrichtung schaltbar, um eine Wahl zwischen Voraus- oder Zurückfahrt zu treffen.

In vielen Fällen ist in das Getriebe auch eine hinsichtlich ihres Schlupfgrades verstellbare Kupplung integriert, wobei durch Variation des Kupplungsschlupfes eine Schleichfahrt (Trolling) steuerbar ist. Bei dieser Schleichfahrt bleibt die Motordrehzahl üblicherweise im Bereich der Leerlaufdrehzahl konstant, während die Fahrgeschwindigkeit des Schiffes durch Variation des Schlupfgrades der Kupplung bestimmt wird. Eine auf diese Weise erzeugte Schleichfahrt kann beispielsweise beim Langsamfahren im Hafen oder beim Hochseeangeln genutzt werden.

Aus der EP 0 524 992 B1 geht eine gattungsgemäße Steuereinrichtung hervor. Diese umfasst Steuer- und Sensormittel zum Beeinflussen der Motordrehzahl sowie des Schlupfgrades der Kupplung, welche eingangsseitig mit einem Kommandogeber zur Wahl der Fahrtrichtung und Geschwindigkeit des Schiffes durch Betätigung mindestens eines Steuerhebels verbunden ist, wobei mit dem Steuerhebel eine Propellerwellendrehzahl und -drehrichtung einstellbar ist, deren Einhaltung durch die Steuerelektronik in der Weise geregelt wird, dass in Abhängigkeit einzuhaltender Betriebsparameter des Motors sowie des Getriebes ein Betriebszustand frei definiert wird, der entweder ein erster Betriebszustand, bei der die Propellerwellendrehzahl und -drehrichtung bei geschlossener Kupplung durch Veränderung der Motordrehzahl herbeigeführt wird, oder ein zweiter Betriebszustand, bei dem die Propellerwellendrehzahl und -drehrichtung bei einer vorgegebenen Motordrehzahl durch Veränderung des Schlupfgrades der Kupplung herbeigeführt wird.

Die für die Regelung des Kupplungsbetriebs erforderlichen Sensormittel führen zu einem recht hohen elektronischen Aufwand. Weiterhin erfolgt die herbeigeführte Veränderung des Schlupfgrades der Kupplung sprunghaft. Denn der Stellwert für die verstellbare Kupplung wird unmittelbar entsprechend der Sollwertvorgabe geändert. Dies führt insbesondere beim Manövrieren zu einer hohen mechanischen Belastung des Antriebsstrangs.

Es ist daher die Aufgabe der vorliegenden Erfindung eine Steuereinrichtung für einen Schiffsantrieb zu schaffen, welche in technisch einfacher Weise einen antriebsschonenden Einkupplungsvorgang für eine insbesondere leistungsstarke Motorisierung gewährleistet.

Die Aufgabe wird ausgehend von einer Steuereinrichtung gemäß des Oberbegriffs von Anspruch 1 in Verbindung mit dessen kennzeichnenden Merkmalen gelöst. Verfahrenstechnisch wird die Aufgabe analog durch Anspruch 5 gelöst. Im Hinblick auf eine gesamte Schiffsantriebsanordnung wird auf Anspruch 9 verwiesen. Die jeweils rückbezogenen abhängigen Ansprüche geben vorteilhafte Weiterbildungen der Erfindung wieder.

Die Erfindung schließt die technische Lehre ein, dass beim Einkuppeln der schlupfverstellbaren Kupplung zur Erleichterung einer Vorwärts- oder Rückwärtsfahrt eine Schlupfvorgabeeinheit der elektronischen Steuereinheit den Schlupfgrad der Kupplung nach Maßgabe einer Rampenfunktionskennlinie zur Verringerung des Kupplungsschlupfes während einer definierten Einkupplungszeitdauer beeinflusst.

Der Vorteil der erfindungsgemäßen Lösung liegt insbesondere darin, dass hiermit ein sanftes Einkuppeln, insbesondere beim Wechsel der Fahrtrichtung, in einfacher signalverarbeitungstechnischer Weise erzielt wird. Denn die Kupplung wird nicht durch einen Stellwertsprung angesteuert, sondern ändert den Stellwert allmählich in Richtung des gewünschten Kupplungsschlupfes. Hierdurch wird die volle Leistung des Schiffsantriebes nicht eingeschränkt, sondern lediglich der Einkupplungsvorgang antriebsschonend durchgeführt. Darüber hinaus hat der Schiffsfiihrer durch das dank Rampenfunktionskennlinie langsamere Beschleunigen mehr Zeit, die gewünschte Manövriergeschwindigkeit einzustellen, bevor wieder ausgekuppelt werden muss. Hierdurch wird das Manövrieren einfacher und zu dem auch sicherer. Die hinsichtlich ihres Schlupfes verstellbare Kupplung überträgt bei maximalem Schlupf kein Drehmoment und schließt die Kupplung beim geringsten Schlupf Dieser Bereich kennzeichnet den Kupplungsschlupf "s". Die Einkupplungszeitdauer "t" zum sanften Einkuppeln liegt vorzugsweise im Bereich weniger Sekunden, ganz vorzugsweise im Bereich zwischen 1 bis 2 Sekunden. Es wird vorgeschlagen, bei größeren Schiffen, mit trägeren zu bewegenden Massen und Schiffen mit geringerem Leistungsüberschuss, eine kürzere Einkupplungszeitdauer "t" zu wählen.

Gemäß einer der Erfindung verbessernden Maßnahme wird vorgeschlagen, dass die elektronische Steuereinheit den vom manuellen Kommandogeber vorgegebenen Fahrbefehl gesplittet, also gleichzeitig, einer ersten Umsetzereinheit zur kennliniengesteuerten Ermittlung eines Motordrehzahlsignals für den nachgeschalteten Motor sowie auch einer zweiten Umsetzereinheit zur kennliniengesteuerten Ermittlung eines Drehrichtungssignals für die nachgeschaltete Kupplung zuführt. Die erfindungsgegenständliche Schlupfvorgabeeinheit kann der zweiten Umsetzereinheit nachgeschaltet werden, um ihre Funktion zur Kupplungsansteuerung zu erfüllen. Damit ist die Schlupfvorgabeeinheit optimal entlang des Signalflusses platziert, um ihre gewünschte Wirkung eines sanften Einkuppelns ausführen zu können.

Gemäß einer anderen die Erfindung verbessernden Maßnahme wird vorgeschlagen, in die Signalverarbeitung zwischen der ersten Umsetzereinheit und dem Motor eine Drehzahlbegrenzungseinheit einzufügen. An dieser Stelle des Signalflusses wird somit die Motordrehzahl auf einen für insbesondere den Trolling-Betrieb geeigneten Bereich begrenzt, um in Zusammenwirken mit der erfindungsgemäßen Schlupfvorgabeeinheit einen stabilen und durch den Schiffsführer manuell gut steuerbaren Antrieb sicher zustellen. Denn während die Rampenfunktion der Schlupfvorgabeeinrichtung aktiv ist, wird über die Drehzahlbegrenzung die Motordrehzahl in einen für den Trolling-Betrieb geeigneten Bereich gehalten.

Um für den Schiffsführer ein bequemes Manövrieren zu ermöglichen, ist vorzugsweise durch den in herkömmlicher Bauart ausgeführten Kommandogeber der elektronischen Steuereinheit sowohl die Fahrtrichtung als auch die Fahrtgeschwindigkeit je nach gewählter Stellung mindestens eines Bedienhebels manuell vorgebbar.

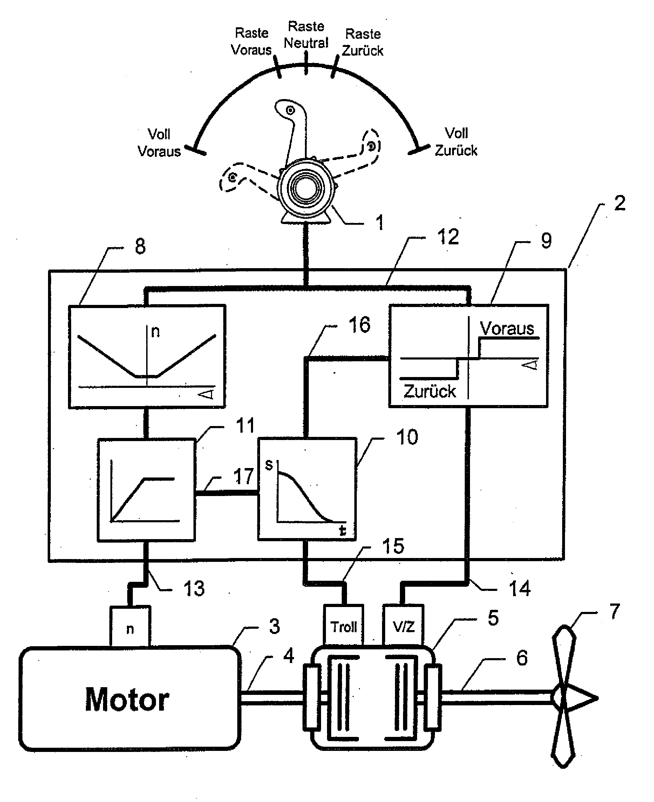

Weitere, die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt eine blockschaltbildartige Darstellung eines Schiffsantriebsanordnung mit elektronischer Steuereinrichtung.

Gemäß Figur umfasst die Steuereinrichtung einen Kommandogeber 1 zur manuellen Wahl der Drehrichtung sowie der Fahrtgeschwindigkeit des - hier nicht weiter dargestellten - Schiffes in Abhängigkeit der vom Schiffsführer gewählten Stellung des Bedienhebels. Das so erzeugte Steuersignal geht einer elektronischen Steuereinheit 2 zu, welche eine nachfolgend näher erläuterte spezielle Signalverarbeitung vornimmt, um ausgangsseitig die Drehzahl n eines Motors 3 sowie einen Schlupfgrad einer in einen nachgeschalteten Getriebe 5 integrierten verstellbaren Kupplung sowie die Drehrichtung des Getriebes 5 einzustellen. Der Motor 3 ist ein Verbrennungsmotor und steht dabei über eine Antriebswelle 4 mit dem Eingang des Getriebes 5 in Verbindung. Ausgangsseitig des Getriebes 5 verläuft eine Propellerwelle 6 zu einem Propeller 7 zwecks Antrieb des Schiffes.

Die elektronische Steuereinheit 2 splittet eingangsseitig den vom manuellen Kommandogeber 1 vorgegebenen Fahrbefehl auf, in dem dieser sowohl einer ersten Umsetzereinheit 8 als auch einer zweiten Umsetzereinheit 9 zu geht. Die erste Umsetzereinheit 8 ermittelt nach Maßgabe der abgebildeten Kennlinie ein Motordrehzahlsignal 13 für den angeschlossenen Motor 3. Zwischen der ersten Umsetzereinheit 8 und dem Motor 3 ist dabei eine Drehzahlbegrenzungseinheit 11 zwischengeschaltet. Die Drehzahlbegrenzungseinheit 11 begrenzt die Motordrehzahl, insbesondere auf einen für einen Trolling-Betrieb geeigneten Bereich, in welchem der Motor 3 stabile Betriebsbedingungen hat.

Die zweite Umsetzereinheit 9 dient dagegen zur kennliniengesteuerten Ermittlung eines Drehrichtungssignals 14 für das hieran angeschlossene Getriebe 5. Das Drehrichtungssignal 14 gibt vor, ob sich das Getriebe 5 vorwärts oder rückwärts drehen soll, um eine Vorausfahrt oder Zurückfahrt des Schiffes in die Wege zu leiten.

Beim Einkuppeln der Kupplung des Getriebes 5 zur Einleitung einer Vorwärts- oder Rückwärtsfahrt ist im Trolling-Betrieb hier zwischen der zweiten Umsetzereinheit 9 und dem Getriebe 5 eine Schlupfvorgabeeinheit 10 zwischengeschaltet. Die Schlupfvorgabeeinheit 10 steuert den Schlupfgrad für die nachgeordnete Kupplung des Getriebes 5 nach Maßgabe einer Rampenfunktionskennlinie. Durch diese Rampenfunktionskennlinie wird der Kupplungsschlupf s während einer Einkupplungszeitdauer t von hier 2 Sekunden verringert, um ein sanftes Einkuppeln beim Getriebe 5 zu ermöglichen. Darüber hinaus generiert die Schlupfvorgabeeinheit 10 auch ein Schaltsignal 17 zur Aktivierung der Drehzahlbegrenzungseinheit 11 zur Drehzahlbegrenzung für den Motor 3, um eine entsprechend koordinierte Ansteuerung des Schiffsantriebs zu gewährleisten.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, mit der erfindungsgegenständlichen Lösung mehrere Getriebe mit hieran angeschlossenen Propellerwellen anzusteuern, um ein sanftes Einkuppeln des angeschlossenen Schiffsantriebs sicher zu stellen.

### Bezugszeichenliste

- 1: Kommandogeber
- 2: Steuereinrichtung
- 3: Motor
- 4: Antriebswelle
- 5: Getriebe
- 6: Propellerwelle
- 7: Propeller
- 8: erste Umsetzereinheit
- 9: zweite Umsetzereinheit
- 10: Schlupfvorgabeeinheit
- 11: Drehzahlbegrenzungseinheit
- 12: Signalsplittingleitung
- 13: Motordrehzahlsignal
- 14: Drehrichtungssignal
- 15: Kupplungsschlupfsignal
- 16: Triggersignal
- 17: Schaltsignal

## Patentansprüche

1. Steuereinrichtung zur Beeinflussung der Drehzahl eines Motors (3) sowie des Schlupfgrads einer diesem nachgeschalteten Kupplung eines Getriebes (5) eines Schiffsantriebes über eine elektronische Steuereinheit (2) nach Maßgabe eines manuellen Kommandogebers (1) zur Wahl der Drehrichtung sowie der Fahrtgeschwindigkeit,
**dadurch gekennzeichnet, dass** beim Einkuppeln der Kupplung zur Einleitung einer Vorwärts- oder Rückwärtsfahrt eine Schlupfvorgabeeinheit (10) der elektronischen Steuereinheit (2) den Schlupfgrad der Kupplung nach Maßgabe einer Rampenfunktionskennlinie zur Verringerung des Kupplungsschlupfes (s) während einer Einkupplungszeitdauer (t) beeinflusst.

2. Steuereinrichtung nach Anspruch 1,
**dadurch gekennzeichnet, dass** die elektronische Steuereinheit (2) den vom manuellen Kommandogeber (1) vorgegebenen Fahrbefehl gesplittet einer ersten Umsetzereinheit (8) zur kennliniengesteuerten Ermittlung eines Motordrehzahlsignals (13) für den nachgeschalteten Motor (3) sowie einer zweiten Umsetzereinheit (9) zur kennliniengesteuerten Ermittlung eines Drehrichtungssignals (14) für das nachgeschaltete Getriebe (5) zuführt.

3. Steuereinrichtung nach Anspruch 1,
**dadurch gekennzeichnet, dass** zwischen der ersten Umsetzereinheit (8) und dem Motor (3) eine Drehzahlbegrenzungseinheit (11) zur Begrenzung der Motordrehzahl auf einen für einen Trolling-Betrieb geeigneten Bereich vorgesehen ist.

4. Steuereinrichtung nach Anspruch 1,
**dadurch gekennzeichnet, dass** durch den Kommandogeber (1) der elektronischen Steuereinheit (2) sowohl die Fahrtrichtung als auch die Fahrtgeschwindigkeit je nach gewählter Stellung mindestens eines Bedienhebels manuell vorgebbar ist.

5. Verfahren zur Beeinflussung der Drehzahl eines Motors (3) sowie des Schlupfgrads einer diesem nachgeschalteten Kupplung eines Getriebes (5) eines Schiffsantriebes über eine elektronische Steuereinheit (2) nach Maßgabe eines manuellen Kommandogebers (1) zur Wahl der Drehrichtung sowie der Fahrtgeschwindigkeit,
**dadurch gekennzeichnet, dass** beim Einkuppeln der Kupplung zur Einleitung einer Vorwärts- oder Rückwärtsfahrt durch eine Schlupfvorgabeeinheit (10) der elektronische Steuereinheit (2) der Schlupfgrad der Kupplung nach Maßgabe einer Rampenfunktionskennlinie zur Verringerung des Kupplungsschlupfes entlang des Einkuppelwegs beeinflusst wird.

6. Verfahren nach Anspruch 5,
**dadurch gekennzeichnet, dass** durch die elektronische Steuereinheit (2) der vom manuellen Kommandogeber (1) vorgegebene Fahrbefehl einer ersten Umsetzereinheit (8) zur kennliniengesteuerten Ermittlung eines Motordrehzahlsignals (13) für den nachgeschalteten Motor (3) sowie einer zweiten Umsetzereinheit (9) zur kennliniengesteuerten Ermittlung eines Drehrichtungssignals (14) für die nachgeschaltete Schaltung des Getriebes (5) zugeführt wird.

7. Verfahren nach Anspruch 5,
**dadurch gekennzeichnet, dass** durch eine Drehzahlbegrenzungseinheit (11) eine Begrenzung der vorgebbaren Motordrehzahl auf einen für einen Trolling-Betrieb geeigneten Bereich durchgeführt wird.

8. Verfahren nach Anspruch 7,
**dadurch gekennzeichnet, dass** die Aktivierung der Drehzahlbegrenzungseinheit (11) durch ein Schaltsignal (17) der Schlupfvorgabeeinheit (10) durchgeführt wird.

9. Schiffsantriebsanordnung mit mindestens einem Motor (3) zur Erzeugung einer Antriebsleistung, dem eine einstellbare Kupplung eines Getriebes (5) nachgeschaltet ist, wobei der Motor (3) sowie das Getriebe (5) an eine elektronische Steuereinrichtung nach einem der vorstehenden Ansprüche angeschlossen ist.

10. Schiffsantriebsanordnung nach Anspruch 9,
**dadurch gekennzeichnet, dass** ausgangsseitig des Getriebes (5) mindestens eine Propellerwelle (6) mit je zugeordnetem Propeller (7) angeordnet ist.
